# EUROPEAN PATENT APPLICATION

(11) **EP 4 786 739 A1**
(43) Date of publication of application: **05.08.2026**
(21) Application number: 26152181.9
(22) Date of filing: 15.01.2026
(51) Int. Cl.: F01D 11/08, F01D 25/12, F01D 11/24, F01D 25/24, C04B 35/80

(54) **CMC COMPONENT, BOAS ASSEMBLY, METHOD OF COOLING A CMC COMPONENT, AND TURBINE ENGINE**

(30) Priority: 16.01.2025 US 202519025965
(71) Applicant: RTX Corporation, Farmington, CT 06032 (US)
(72) Inventor: SMIDDY, Winston, 06074 South Windsor (US); LUTJEN, Paul, 04046 Kennebunkport (US); WILKINS, Peter, 06033 Glastonbury (US); SCHNEIDER, Alex, 06042 Manchester (US)
(74) Representative: Dehns

(57) **Abstract**

A ceramic matrix composite (CMC) component (200) for a turbine engine includes a base (210) having a radial outer surface (212) and a radial inner surface inward surface (215). The base includes a plurality of ceramic fiber plies and a ceramic matrix. A forward flange structure (220) and an aft flange structure (230) each extend from the radial outer surface of the base. A splash plate (270) is positioned between the forward flange structure and the aft flange structure to direct cooling air flowing from a forward end of the base to an aft end of the base towards the radial outer surface of the base. The splash plate has a first end proximate the forward flange structure, a second end proximate the aft flange structure, and an inner surface facing the radial outer surface of the base and including a curved surface region (275) that curves towards the outer radial surface of the base. The CMC component is a blade outer air seal (BOAS). A BOAS assembly includes a plurality of the BOAS segments arranged to form an annular shaped structure. A method of assembling the CMC component includes: providing the CMC component and providing the splash plater plate. The turbine engine includes a fan section (22), a compressor section (24), a combustion chamber (56), and a turbine section (28). The turbine section includes at least one rotor and one or more turbine blade(s) extending radially outwardly from the at least one rotor; the blade outer air seal assembly positioned between the one or more turbine blade(s); and an outer casing (36).

## Description

### FIELD OF THE INVENTION

The present disclosure relates generally to methods for manufacturing ceramic matrix composites (CMCs). In particular, the present disclosure concerns manufacturing CMC components with structures to facilitate cooling and directing/controlling the flow of cooling air.

### BACKGROUND OF THE INVENTION

Gas turbine engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (flow path components). Therefore, it is desirable that such flow path components be made of heat resistant materials, for example, superalloys and ceramic matrix composites (CMCs). While these materials are heat resistant, to increase the operational lifespan of turbine engine components made these materials can be provided with structures to permit the flow of cooling fluid (e.g., cooling air) to interact with and cool the component.

While CMC materials can withstand much higher operating temperatures than components composed of superalloys, CMCs have comparably lower thermal conductivity than superalloys. Thus, it is particularly desirable to take steps to efficiently cool CMC components using available cooling air flows.

In the cooling of jet engine CMC components, the general flow of the cooling air is in an axial direction, i.e., from the forward end of the engine towards the aft. Directing part of the cooling air towards surfaces of the CMC component can increase the efficient utilization of the cooling air.

There is thus a continuing need for providing alternative and/or improved cooling structures and methods for manufacturing such cooling structures in CMC that allow for efficient and effective cooling of CMC components exposed to high temperature gas flow.

### SUMMARY OF THE INVENTION

In general, the present disclosure relates to methods and devices for directing cooling air in conjunction with cooling CMC components, particularly structures used to direct and/or control cooling air flow towards the outer radial surface of CMC components such as blade outer air seals (BOAS).

The present disclosure is directed, in a first aspect, to a ceramic matrix composite (CMC) component comprising:
a base having a radial outer surface and a radial inner surface inward surface, the base comprising a plurality of ceramic fiber plies and a ceramic matrix,
a forward flange structure and an aft flange structure each extending from the radial outer surface of the base, and
a splash plate positioned between the forward flange structure and the aft flange structure to direct cooling air flowing from a forward end of the base to an aft end of the base towards the radial outer surface of the base,
the splash plate having a first end proximate the forward flange structure and a second end proximate the aft flange structure, the splash plate further having an inner surface facing the radial outer surface of the base wherein the inner surface includes a curved surface region that curves towards the outer radial surface of the base.

The present disclosure is also directed, in a further aspect, to a method of cooling a CMC component, the method comprising:
providing a CMC component comprising:
   a base having a radial outer surface and a radial inner surface inward surface, the base comprising a plurality of ceramic fiber plies and a ceramic matrix, and
   a forward flange structure and an aft flange structure each extending from the radial outer surface of the base,
providing a splash plate positioned between the forward flange structure and the aft flange structure to direct cooling air flowing from a forward end of the base to an aft end of the base towards the radial outer surface of the base, the splash plate comprising:
   a first end proximate the forward flange structure and a second end proximate the aft flange structure, and
   an inner surface facing the radial outer surface of the base wherein the inner surface includes a curved surface region that curves towards the outer radial surface of the base.

The present disclosure is further directed, in an additional aspect, to a turbine engine comprising:
a fan section, a compressor section, a combustion chamber, and a turbine section, the turbine section including at least one rotor and one or more turbine blade(s) extending radially outwardly from the at least one rotor; and
a blade outer air seal assembly positioned between the one or more turbine blade(s) and an outer casing to the engine;
wherein the blade outer air seal assembly is formed of a plurality blade outer air seal segments, wherein each blade outer air seal segment comprises:
   a base having a radial outer surface and a radial inner surface inward surface, the base comprising a plurality of ceramic fiber plies and a ceramic matrix,
   a forward flange structure and an aft flange structure each extending from the radial outer surface of the base, and
   a splash plate positioned between the forward flange structure and the aft flange structure to direct cooling air flowing from a forward end of the base to an aft end of the base towards the radial outer surface of the base,
   the splash plate having a first end proximate the forward flange structure and a second end proximate the aft flange structure, the splash plate further having an inner surface facing the radial outer surface of the base wherein the inner surface includes a curved surface region that curves towards the outer radial surface of the base.

In further examples of the present disclosure, including further examples of the above, the curved surface region curves continuously towards the outer radial surface of the base from the first end to the second end of the splash plate.

In further examples of the present disclosure, including further examples of the above, the inner surface of the splash plate further includes a flat surface region proximate to the first end thereof and the curved surface is proximate to the second end thereof.

In further examples of the present disclosure, including further examples of the above, the base further comprises at least one cooling cavity that extends from the outer radial surface of the base into an interior region of the base, and wherein the splash plate directs cooling air towards the at least one cooling cavity.

In further examples of the present disclosure, including further examples of the above, the at least one cooling cavity is covered by a cover plate or impingement plate having one or more cooling holes to allow cooling air directed by the splash plate to enter the at least one cooling cavity.

In further examples of the present disclosure, including further examples of the above, the second end of the splash plate contacts the cover plate or impingement plate.

In further examples of the present disclosure, including further examples of the above, the second end of the splash plate contacts outer radial surface of the base.

In further examples of the present disclosure, including further examples of the above, the first end of the splash plate is attached to the forward flange structure.

In further examples of the present disclosure, including further examples of the above, the splash plate is made from multiple rectangular plate segments, wherein adjacent plate segments are angled with respect to one another to form a faceted splash plate in which the facets form the curved surface region.

In further examples of the present disclosure, including further examples of the above, multiple splash plates are provide in which each splash plate is positioned between the forward flange structure and the aft flange structure to direct cooling air flowing from a forward end of the base to an aft end of the base towards the radial outer surface of the base, and each splash plate has a first end proximate the forward flange structure and a second end proximate the aft flange structure, each splash plate further having an inner surface facing the radial outer surface of the base wherein the inner surface includes a curved surface region that curves towards the outer radial surface of the base.

In further examples of the present disclosure, including further examples of the above,
the forward flange structure has a first attachment pin opening and a second attachment pin opening and the aft flange structure has a first attachment pin opening and a second attachment pin opening to allow for insertion of a first attachment pin through the first attachment pin openings in the forward and aft flange structures and insertion of a second attachment pin through the second attachment pin openings in the forward and aft flange structures, and
wherein the splash plate is designed to be positioned between the first attachment pin and the second attachment pin.

In further examples of the present disclosure, including further examples of the above,
the forward flange structure has a first attachment pin opening and a second attachment pin opening and the aft flange structure has a first attachment pin opening and a second attachment pin opening to allow for insertion of a first attachment pin through the first attachment pin openings in the forward and aft flange structures and insertion of a second attachment pin through the second attachment pin openings in the forward and aft flange structures, and
wherein the splash plate includes slots to allow passage of the first attachment pin and the second attachment pin through the splash plate.

In further examples of the present disclosure, including further examples of the above, the component is a combustor liner.

In further examples of the present disclosure, including further examples of the above, the component is a blade outer air seal (BOAS) segment.

In further examples of the present disclosure, including further examples of the above, the component is a BOAS assembly wherein a plurality of BOAS segments are arranged to form an annular shaped structure.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Fig. 1 schematically illustrates a partial cross section of an exemplary gas turbine engine.
Fig. 2 is a perspective view of a blade outer air seal (BOAS) segment.
Fig. 3 is a perspective top view of a BOAS segment with splash plate.
Fig. 4 is a cross sectional view of a BOAS segment with splash plate.
Fig. 5 is a cross sectional view of a BOAS segment with a segmented splash plate.
Fig. 6 is cross sectional view of a BOAS segment with multiple splash plates.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

While the discussion below often makes reference to BOAS and BOAS segments, it should be recognized that the present disclosure is not limited to BOAS but includes other CMC components used within jet engines that may be exposed to high temperature gas flows, for example, other seals, vane airfoils and platforms therefor, and combustor liners.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces in the direction toward the flow of the hot gases, i.e., faces upstream. The trailing edge/portion of a structure is the edge/portion that the faces in the direction away from the flow of the hot gases, i.e., faces downstream.

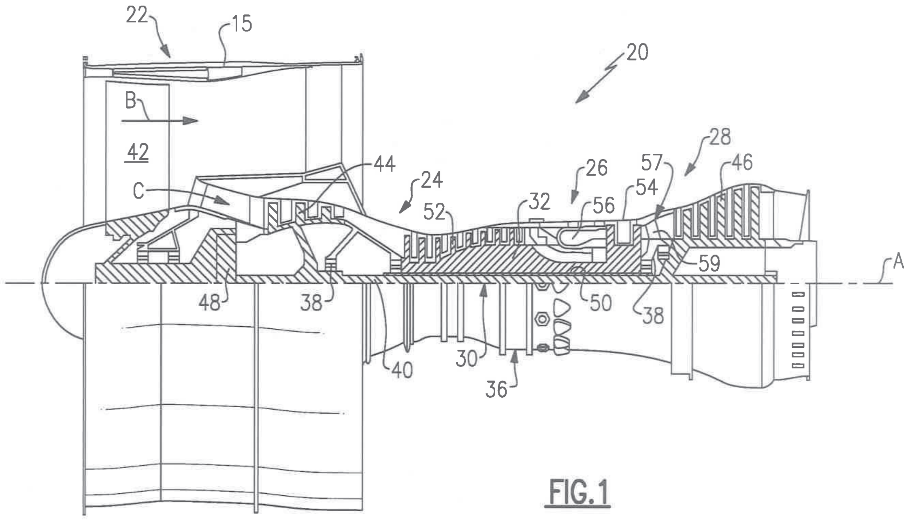

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

As noted above, jet engine components, such as BOAS, BOAS segments, other seals, vane airfoils and platforms therefor, blade airfoils and platforms therefor, and combustor liners, can be made from CMC materials. In general, these CMC components are prepared by first creating a CMC preform which serves as the initial framework for creating the CMC component. The preform contains a stack of fabric sheets or plies in which the stack is formed via a layup process. The plies are made from ceramic fibers, or bundles of ceramic fibers called tows, held together with a binder. The fiber tows can be in the form of unidirectional tows or can be woven fibers. For example, the fibers can be woven into a two-dimensional fabric sheet or ply and then the plies are stacked during the layup process to form the preform. Alternatively, the preform can be in the form of a three-dimensional weave wherein, for example, a plurality of warp fibers are interwoven through a plurality of weft fiber layers. Binders can be used to help hold the fibers/plies together to provide a certain rigidity to the preform, for example, polymeric binders such as polyvinyl alcohol (PVA) or polyvinyl butyral (PVB).

The fibers/filaments used in the CMC preforms may be, for example, silicon carbide (SiC), carbon, mullite, zirconium carbide (ZrC), hafnium carbide (HfC), silicon nitride, aluminum oxide, or combinations thereof. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In one particular example, the fibers are SiC fibers.

After the CMC preform is formed by the layup, the preform is subjected to densification to add matrix material to fill the remaining void spaces within the preform. This procedure stiffens and strengthens the fiber layers or woven plies of ceramic fiber tows to form the CMC. Thus, densification involves reducing the porosity within the preform, making it more solid and robust, by filing the remaining pores within the preform. The goal is to achieve a higher relative density, and ensure that the final CMC structure is compact and free of large voids. In one particular example, the CMC material contains SiC fibers within a SiC matrix, also referred to as a SiC/SiC composite.

Various methods can be used to add matrix material during densification. These include, but are not limited to, chemical vapor infiltration (CVI), melt infiltration (MI), for example, reactive melt infiltration (RMI) (such as liquid silicon infiltration (LSI)), and polymer infiltration and pyrolysis (PIP).

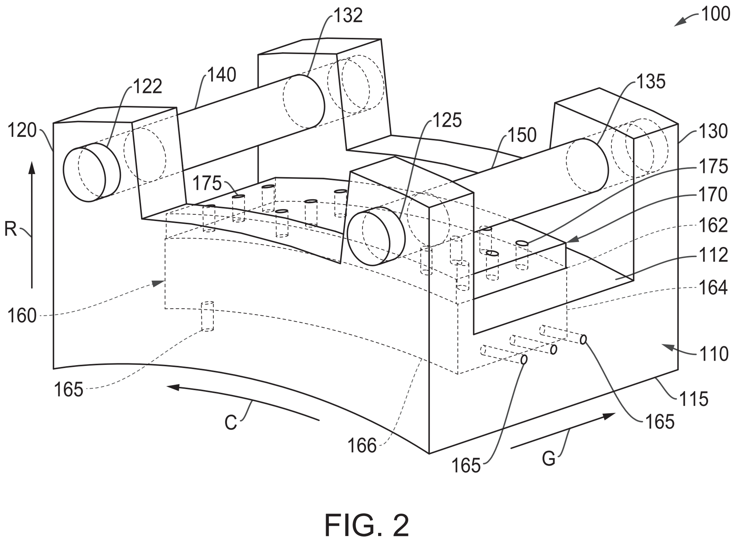

Fig. 2 illustrates a CMC component, specifically a blade outer air seal (BOAS) segment 100. In this figure, direction R indicates the radial direction, direction G indicates the axial direction or the direction of flow of hot gases through an engine, and direction C indicates a circumferential direction. The segment 100 includes a base 110 having a radial outer surface 112 and a radial inner surface 115. As shown in this embodiment, the radial outer surface 112 has a convex shape and the radial inner surface 115 has a concave shape. Segment 100 further includes a forward flange structure 120 and an aft flange structure 130. These two flange structures each extend from the radial outer surface 112 of the base 110. These flange structures are load bearing features and provide means for attaching the CMC component to another structure, for example, the outer casing of an engine. The base 110 and flange structures 120, 130 are made of a CMC material comprising a plurality of ceramic fiber plies and a ceramic matrix.

The flange structures are provided with openings to permit the attachment of retention/supporting hardware. As shown in Fig. 2, the forward flange structure 120 has a first opening 122 and a second opening 125. The aft flange structure 130 also has a first opening 132 and a second opening 135. Also shown in Fig. 2 are attachment pins 140 and 150. The first attachment pin 140 passes through the first opening 122 of the forward flange structure 120 and the first opening 132 of the aft flange structure 130. The second attachment pin 150 passes through the second opening 125 of the forward flange structure 120 and the second opening 135 of the second flange structure 130.

The base 110 is also provided with a cooling cavity 160. The cooling cavity 160 extends from the outer radial surface 112 of the base 110 into an interior region of the base 110 and has a cavity opening 162 at the outer radial surface of the base. The cooling cavity 160 is defined by cavity side walls 164 and a cavity bottom wall 166. Additionally, the cooling cavity 160 can be provided with one or more cooling air outlets 165 to provide for the discharge of cooling air from the cooling cavity, for example, discharge though a side wall of base 110 or through the radial inner surface 115. The cooling cavity 160 can optionally be covered by a cover plate or impingement plate 170 in which or more cooling holes 175 are provided to allow cooling air to enter the cooling cavity 160.

The cooling cavity 160 can be formed in the base prior to densification of the CMC preform by precutting the fiber plies that are to be laid up to form the preform with a cavity or by cutting (machining) the cavity into the preform once the plies are laid up. Alternatively, the cooling cavity can be created by machining after an initial pre-densification, such as by chemical vapor infiltration (CVI), or after final densification.

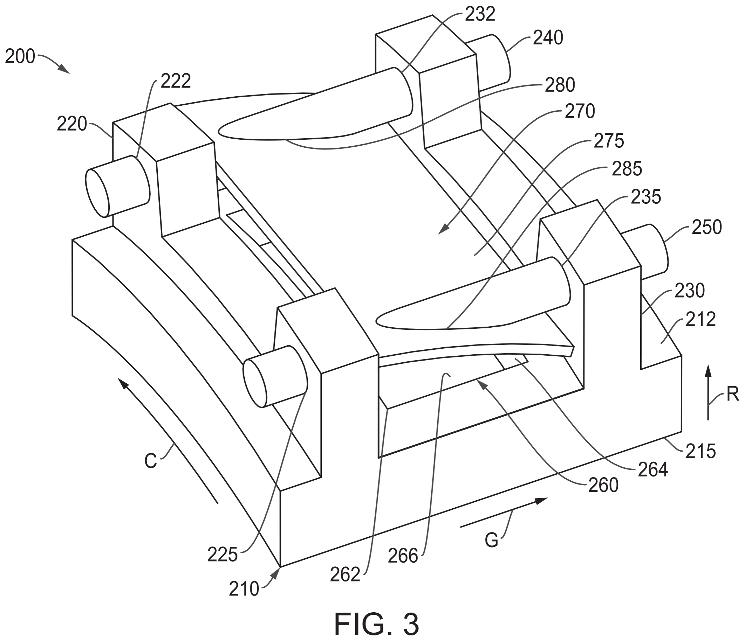

Fig. 3 shows a BOAS segment 200 having a splash plate in accordance with the present disclosure. The segment 200 includes a base 210 having a radial outer surface 212, a radial inner surface inward surface 215, a forward flange structure 220, and an aft flange structure 230. The forward flange structure 220 has a first opening 222 and a second opening 225. The aft flange structure 230 also has a first opening 232 and a second opening 235. In this embodiment, the base 210 is also provided with a cooling cavity 260 having a cooling cavity opening 262 at the radial outer surface 212. The cooling cavity 260 is defined by side walls 264 and a cooling cavity bottom wall 266.

Also shown in Fig. 3 are attachment pins 240 and 250. The first attachment pin 240 passes through the first opening 222 of the forward flange structure 220 and the first opening 232 of the aft flange structure 230. The second attachment pin 250 passes through the second opening 225 of the forward flange structure 220 and the second opening 235 of the second flange structure 230.

Positioned above the cooling cavity 260 is a splash plate 270. As shown in this embodiment, the splash plate 270 has a first end proximate the forward flange structure 220 and a second end proximate the aft flange structure 230. The splash plate 270 can, for example, be connected to the forward flange structure 220 and extend in an axial direction from the forward flange structure 220 towards the aft flange structure 230. Splash plate 270 has a curved surface region 275 that curves towards the outer radial surface 212 of the base 210. The curved surface region 275 can curve continuously towards the outer radial surface of the base from the first end to the second end of the splash plate. Alternatively, the inner surface of the splash plate 270 can have a flat surface region proximate the first end thereof and the curved surface region 275 is proximate to the second end thereof. In operation, cooling air flowing in an axial direction from the forward flange structure 220 towards the aft flange structure 230 is deflected in a downward radial direction towards the cooling cavity 260. As noted above, the splash plate 270 can be connected to the forward flange structure 220. However, the splash plate 270 can be held in position by other means. For example, as also shown in Fig. 3, the splash plate 270 can be provided with slots 280 and 285 that accommodate the attachment pins 240 and 250, and thus the splash plate 270 rests on the attachment pins 240 and 250. The slot arrangement between the splash plate slots and the attachment pins could be a friction fit. Alternatively, the connection between the splash plate slots and the attachment pins can involve a bushing or grommet arrangement to provide a better seal at the interface.

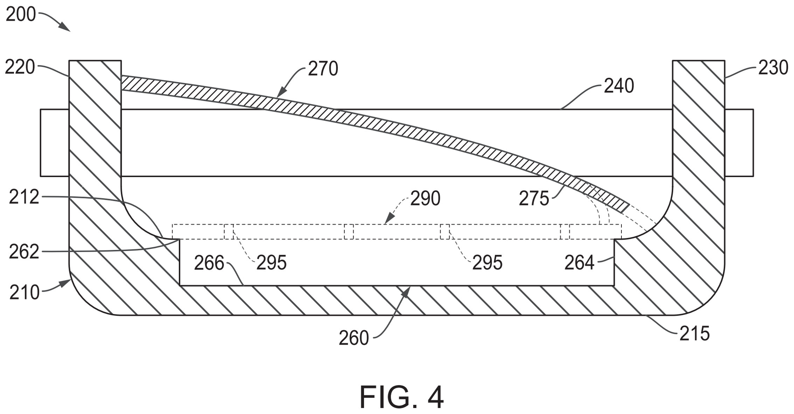

Fig. 4 shows a cross section of BOAS segment 200. In this embodiment, the segment is shown (with dotted lines) as optionally including a cover plate or impingement plate 290 resting on the outer radial surface 212 and covering the cooling cavity opening 262. The cover plate/impingement plate 290 is provided with one or more cooling holes 295 to allow cooling air deflected by the curved surface 257 of the splash plate 270 to enter the cooling cavity 260.

As shown in Fig. 4 by dotted lines, the splash plate 270 can extend downwards and contact the cover plate/impingement plate 290 to provide support for the splash plate 270 and/or to aid in retaining the cover plate/impingement plate 290 in position. Alternatively, the splash plate 270 can extend downwards and contact the radial outer surface 212 of the BOAS segment 200 such that the radial outer surface 212 helps to support the splash plate 270.

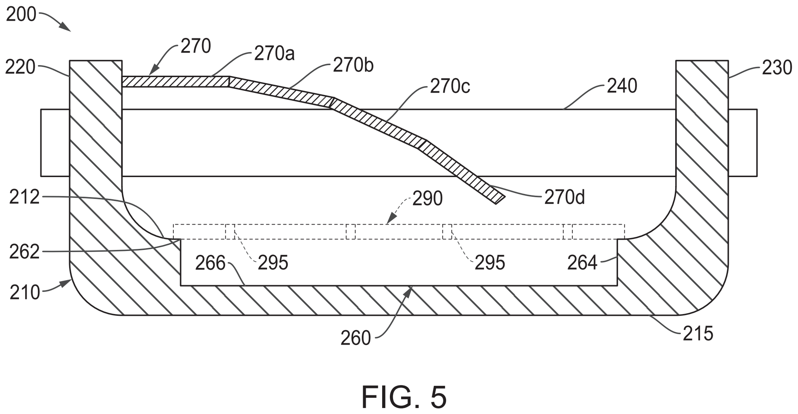

Additionally, while the splash plate 270 is shown as a single plate in Fig. 4, it should be noted that that the plate could be made in sections/segments as shown in Fig. 5. In this embodiment, the splash plate 270 is made from multiple rectangular plate segments 270a, 270b, 270c, and 270d. These plate segments can be connected together (e.g., welded to one another), wherein adjacent plate segments are angled with respect to one another, to form a single faceted plate, the facets forming a curved surface region that curves towards the outer radial surface 212 of the base 210.

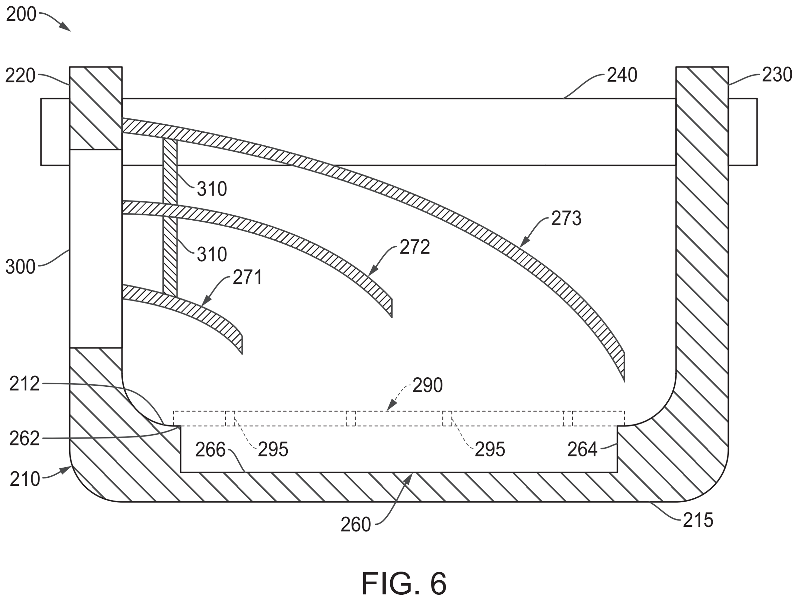

Fig. 6 shows a BOAS segment 200 wherein multiple splash plates are present. As shown in the Figure, the forward flange 220 is provided with a gap 300 which will permit cooling air to pass through the flange and interact with splash plates 271, 272, and 273. The three splash plates are an assembly wherein splash plate 272 is connected to splash plate 273 by struts 310 and splash plate 271 is connected to splash plate 272 also by struts 310. Splash plate 273 is supported by the attachment pins 240 and 250 (only attachment pin 240 is shown in this cross-sectional view) via a slot arrangement as described above for Fig. 3. As noted above, this slot arrangement can be a friction fit, or can involve a bushing or grommet arrangement to provide a better seal at the interface.

The present disclosure provides an efficient method for directing cooling air towards an outer radial surface of a CMC component and/or cooling cavities within the interior of CMC components thereby reducing the formation of thermal stresses resulting from the thermal differential between the outer radial surface (cold side) and inner radial surface (hot side) of the component.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A ceramic matrix composite (CMC) component (200) comprising:
a base (210) having a radial outer surface (212) and a radial inner surface inward surface (215), the base (210) comprising a plurality of ceramic fiber plies and a ceramic matrix,
a forward flange structure (220) and an aft flange structure (230) each extending from the radial outer surface (212) of the base (210), and
a splash plate (270) positioned between the forward flange structure (220) and the aft flange structure (230) to direct cooling air flowing from a forward end of the base (210) to an aft end of the base (210) towards the radial outer surface (212) of the base (210),
the splash plate (270) having a first end proximate the forward flange structure (220) and a second end proximate the aft flange structure (230), the splash plate (270) further having an inner surface facing the radial outer surface (212) of the base (210) wherein the inner surface includes a curved surface region (275) that curves towards the outer radial surface (212) of the base (210).

2. The CMC component according to claim 1, wherein the curved surface region (275) curves continuously towards the outer radial surface (212) of the base (210) from the first end to the second end of the splash plate (270).

3. The CMC component according to claim 1, wherein the inner surface of the splash plate (270) further includes a flat surface region proximate to the first end thereof and the curved surface region (275) is proximate to the second end thereof.

4. The CMC component according to any preceding claim, wherein the base (210) further comprises at least one cooling cavity (260) that extends from the outer radial surface (212) of the base (210) into an interior region of the base (210), and wherein the splash plate (270) directs cooling air towards the at least one cooling cavity (260).

5. The CMC component according to claim 4, wherein the at least one cooling cavity (260) is covered by a cover plate or impingement plate (290) having one or more cooling holes (295) to allow cooling air directed by the splash plate (270) to enter the at least one cooling cavity (260), optionally wherein the second end of the splash plate (270) contacts the cover plate or impingement plate (290).

6. The CMC component according to any preceding claim, wherein the second end of the splash plate (270) contacts outer radial surface (212) of the base (210); and/or wherein the first end of the splash plate (270) is attached to the forward flange structure (220).

7. The CMC component according to any preceding claim, wherein the splash plate (270) is made from multiple rectangular plate segments (270a, 270b, 270c, 270d), wherein adjacent plate segments (2702, 270b, 270c, 270d) are angled with respect to one another to form a faceted splash plate (270) in which the facets form the curved surface region (275).

8. The CMC component according to claim 1, wherein multiple splash plates (271, 272, 273) are provided in which each splash plate (271, 272, 273) is positioned between the forward flange structure (220) and the aft flange structure (230) to direct cooling air flowing from a forward end of the base (210) to an aft end of the base (210) towards the radial outer surface (212) of the base (210), and each splash plate (271) has a first end proximate the forward flange structure (220) and a second end proximate the aft flange structure (230), each splash plate (271, 272, 273) further having an inner surface facing the radial outer surface (212) of the base (210) wherein the inner surface includes a curved surface region that curves towards the outer radial surface (212) of the base (210).

9. The CMC component according to any of claims 1 to 7, wherein the forward flange structure (220) has a first attachment pin opening (222) and a second attachment pin opening (225) and the aft flange structure (230) has a first attachment pin opening (232) and a second attachment pin opening (235) to allow for insertion of a first attachment pin (240) through the first attachment pin openings (222; 232) in the forward and aft flange structures (220, 230) and insertion of a second attachment pin (250) through the second attachment pin openings (225; 235) in the forward and aft flange structures (220, 230), and
wherein:
the splash plate (270) is designed to be positioned between the first attachment pin (240) and the second attachment pin (250); and/or
the splash plate (270) includes slots (280; 285) to allow passage of the first attachment pin (240) and the second attachment pin (250) through the splash plate (270).

10. The CMC component according to any preceding claim, wherein the component is a combustor liner.

11. The CMC component according to any of claims 1 to 9, wherein the component (200) is a blade outer air seal (BOAS) segment (200).

12. A BOAS assembly comprising a plurality of BOAS segments (200) according claim 11, wherein the BOAS segments (200) are arranged to form an annular shaped structure.

13. A method of cooling a CMC component (200), the method comprising:
providing a CMC component (200) comprising:
a base (210) having a radial outer surface (212) and a radial inner surface inward surface (215), the base (210) comprising a plurality of ceramic fiber plies and a ceramic matrix, and
a forward flange structure (220) and an aft flange structure (230) each extending from the radial outer surface (212) of the base (210),
providing a splash plate (270) positioned between the forward flange structure (220) and the aft flange structure (230) to direct cooling air flowing from a forward end of the base (210) to an aft end of the base (210) towards the radial outer surface (212) of the base (210), the splash plate (270) comprising:
a first end proximate the forward flange structure (220) and a second end proximate the aft flange structure (230), and
an inner surface facing the radial outer surface (212) of the base (210) wherein the inner surface includes a curved surface region (275) that curves towards the outer radial surface (212) of the base (210).

14. The method according to claim 13, wherein:
the curved surface region (275) curves continuously towards the outer radial surface (212) of the base (210) from the first end to the second end of the splash plate (270); or
the inner surface of the splash plate (270) further includes a flat surface region proximate to the first end thereof and the curved surface (275) is proximate to the second end thereof; and/or
the base (210) further comprises at least one cooling cavity (260) that extends from the outer radial surface (212) of the base (210) into an interior region of the base (210), and wherein the splash plate (270) directs cooling air towards the at least one cooling cavity (260).

15. A turbine engine (20) comprising:
a fan section (22), a compressor section (24), a combustion chamber (56), and a turbine section (28), the turbine section (28) including at least one rotor and one or more turbine blade(s) extending radially outwardly from the at least one rotor; and
a blade outer air seal assembly positioned between the one or more turbine blade(s) and an outer casing (36) to the engine (20);
wherein the blade outer air seal assembly is formed of a plurality blade outer air seal segments (200), wherein each blade outer air seal segment (200) is a CMC component (200) according to claim 11.
